# EUROPEAN PATENT APPLICATION

(11) **EP 4 593 417 A1**
(43) Date of publication of application: **30.07.2025**
(21) Application number: 23877595.1
(22) Date of filing: 05.10.2023
(51) Int. Cl.: H04R 1/28, H04R 9/02, H04R 3/04, G06F 11/30, G06F 11/32, G06F 1/16

(54) **ELECTRONIC DEVICE AND METHOD FOR DETECTING RESONANCE SPACE CHANGE OF SPEAKER**

(30) Priority: 11.10.2022 KR 20220130112; 11.11.2022 KR 20220151013
(71) Applicant: Samsung Electronics Co., Ltd., Suwon-si, Gyeonggi-do 16677 (KR)
(72) Inventor: PARK, Youngbae, Suwon-si Gyeonggi-do 16677 (KR); ROH, Hyunjong, Suwon-si Gyeonggi-do 16677 (KR); KIM, Seungnam, Suwon-si Gyeonggi-do 16677 (KR); PARK, Choonghyo, Suwon-si Gyeonggi-do 16677 (KR); BAE, Sumin, Suwon-si Gyeonggi-do 16677 (KR); YOON, Gunhyuk, Suwon-si Gyeonggi-do 16677 (KR); HONG, Janghoon, Suwon-si Gyeonggi-do 16677 (KR)
(74) Representative: HGF
(86) International application number: PCT/KR2023/015365
(87) International publication number: WO 2024/080667

(57) **Abstract**

This electronic device may comprise at least one processor and a speaker. The at least one processor may: transmit a first pilot signal via the speaker by using a first frequency; identify a first impedance of the speaker while the first pilot signal is being transmitted via the speaker; transmit a second pilot signal via the speaker by using a second frequency different from the first frequency; identify a second impedance of the speaker while the second pilot signal is being transmitted via the speaker; detect a change in a space state of the speaker, on the basis of the first impedance and the second impedance; identify at least one audio signal processing parameter on the basis of the change in the space state of the speaker; and transmit an audio signal via the speaker on the basis of the at least one audio signal processing parameter.

## Description

### [Technical Field]

Various embodiments relate to an electronic device and a method for detecting a resonance space change of a speaker.

### [Background Art]

Sound outputted through a speaker may resonate differently according to a resonance space of the speaker. A characteristic of the sound may vary according to the resonance space of the speaker. The speaker may generate sound based on an audio signal. In case that the characteristic of the sound varies, a processing method of the audio signal may be changed to improve sound quality.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to embodiments, an electronic device is provided. The electronic device may comprise at least one processor and a speaker. The at least one processor may transmit a first pilot signal through the speaker using a first frequency. The at least one processor may identify a first impedance of the speaker while the first pilot signal is transmitted through the speaker. The at least one processor may transmit a second pilot signal through the speaker using a second frequency different from the first frequency. The at least one processor may identify a second impedance of the speaker while the second pilot signal is transmitted through the speaker. The at least one processor may detect a change in a space state of the speaker based on the first impedance and the second impedance. The at least one processor may identify at least one audio signal processing parameter based on the change in the space state of the speaker. The at least one processor may transmit an audio signal through the speaker based on the at least one audio signal processing parameter. The audio signal processing parameter may be used when adjusting gain of the audio signal to optimize sound quality of the audio signal. For example, the audio signal processing parameter may include a first audio signal processing parameter and a second audio signal processing parameter. The at least one processor may increase the gain of the audio signal having a frequency equal to or greater than the specified value based on the first audio signal processing parameter. The at least one processor may determine a gain degree of the audio signal by the amplifier based on the second audio signal processing parameter. The space state of the speaker may be a state for a space through which sound generated by the speaker passes to be radiated to the outside.

According to embodiments, a method performed by an electronic device is provided. The method may comprise outputting a first pilot signal through a speaker using a first frequency. The method may comprise identifying a first impedance of the speaker while the first pilot signal is output through the speaker. The method may comprise outputting a second pilot signal through the speaker using a second frequency different from the first frequency. The method may comprise identifying a second impedance of the speaker while the second pilot signal is output through the speaker. The method may comprise detecting a change in a space state of the speaker based on the first impedance and the second impedance. The method may comprise identifying at least one audio signal processing parameter based on the change in the space state of the speaker. The method may comprise outputting an audio signal through the speaker based on the at least one audio signal processing parameter. The space state of the speaker may be a state for a space through which sound generated by the speaker passes to be radiated to the outside.

According to embodiments, a non-transitory storage medium is provided. The non-transitory storage medium may comprise memory storing instruction. The instructions, when executed by a processor, may cause an electronic device to output a first pilot signal through a speaker using a first frequency, identify a first impedance of the speaker while the first pilot signal is output through the speaker, output a second pilot signal through the speaker using a second frequency different from the first frequency, identify a second impedance of the speaker while the second pilot signal is output through the speaker, detect a change in a space state of the speaker based on the first impedance and the second impedance, identify at least one audio signal processing parameter based on the change in the space state of the speaker, and output an audio signal through the speaker based on the at least one audio signal processing parameter. The space state of the speaker may include at least one of a state related to a first space region for passage of sound of the speaker or a state related to a second space region for resonance of sound of the speaker.

### [Description of the Drawings]

FIG. 1 is a block diagram illustrating an electronic device in a network environment according to various embodiments.
FIG. 2 is a block diagram of an audio module according to embodiments.
FIG. 3 illustrates an example of an operation of a speaker according to embodiments.
FIG. 4A illustrates an example of a space state according to embodiments.
FIG. 4B illustrates an example of a change in a space state according to embodiments.
FIG. 5 illustrates an example of an impedance according to a change in a space state according to embodiments.
FIG. 6 illustrates a flow of an operation of an electronic device for changing at least one audio signal processing parameter according to a change in a space state according to embodiments.
FIG. 7 illustrates a flow of an operation of an electronic device for detecting a change in a space state according to embodiments.
FIG. 8 illustrates an example of an impedance change according to a degree of charging of a battery.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

Terms referring to a first space area (e.g., a first space area, a forward space area, a front space area, , a forward space, a front space, a front duct, and a forward duct), terms referring to an audio signal (e.g., an audio signal, an electrical audio signal, a speaker signal, and an electrical speaker signal), terms referring to a sound wave (a sound wave, a sound wave generated by a speaker, a sound signal, a sound signal generated by a speaker, and sound), and terms referring to a specified value (a reference value, and a threshold value), and the like used in the following description are exemplified for convenience of description. Therefore, the present disclosure is not limited to terms described below, and another term having an equivalent technical meaning may be used. In addition, terms such as '...part', '...device', '...material', and '...body', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' refer to including at least one of 'C' or 'D', that is, {'C', 'D', and 'C' and 'D'}.

Prior to describing embodiments of the present disclosure, terms necessary to describe operations of an electronic device according to embodiments are defined.

A first pilot signal may be an audio signal for identifying a change in a temperature of a coil included in a speaker or a change in a space state. A second pilot signal means an audio signal outputted through the speaker to identify a change in a first space region or a change in a second space region of the speaker. The first space region, which is a space for passage of sound of the speaker, may include a space on a side of the diaphragm. The first space region may be referred to as a front duct portion, a forward space region, or a forward space region. The second space region may be a rear space of the speaker opposite to the first space region. The second space region, which is a space for resonance of sound of the speaker, may include a space on an opposite side of the side of the diaphragm. The second space region may be referred to as a backward space region or a rear space region.

Hereinafter, various embodiments disclosed in the present document will be described with reference to attached drawings. For convenience of a description, components illustrated in the drawings may be exaggerated or reduced in a size, and the present invention is not necessarily limited to what is illustrated.

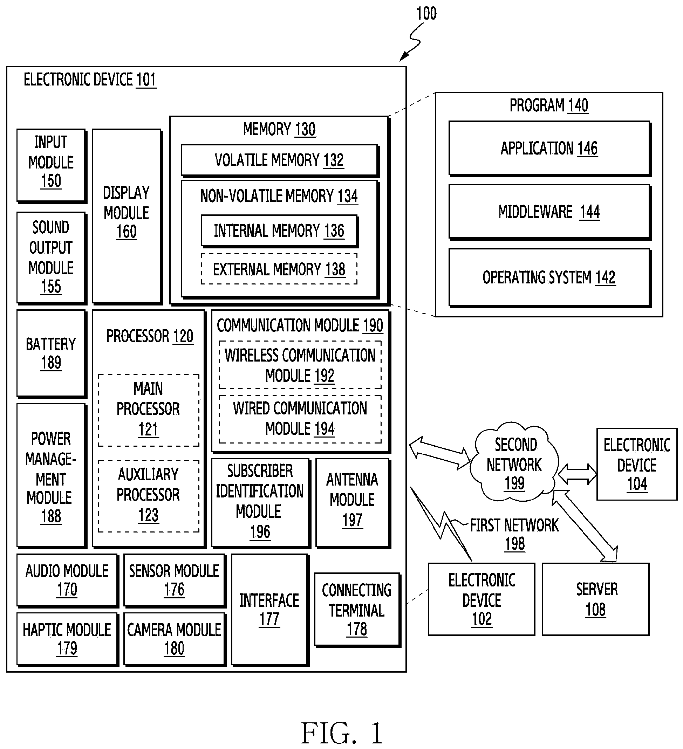

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine leaming. Such leaming may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

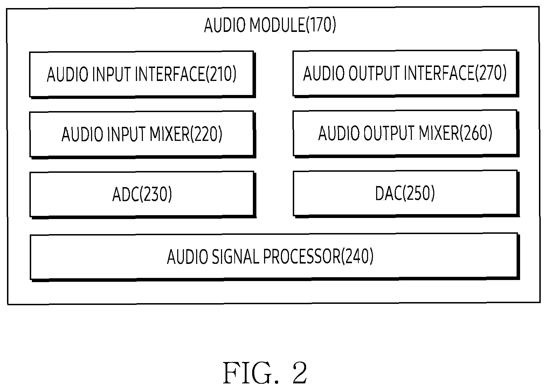

Fig. 2 is a block diagram 200 illustrating the audio module 170 according to various embodiments. Referring to Fig. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio input interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., BluetoothTM communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130) of the electronic device 101.

The audio input mixer 220 may synthesize a plurality of inputted audio signals into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor(120) or the memory(130)) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

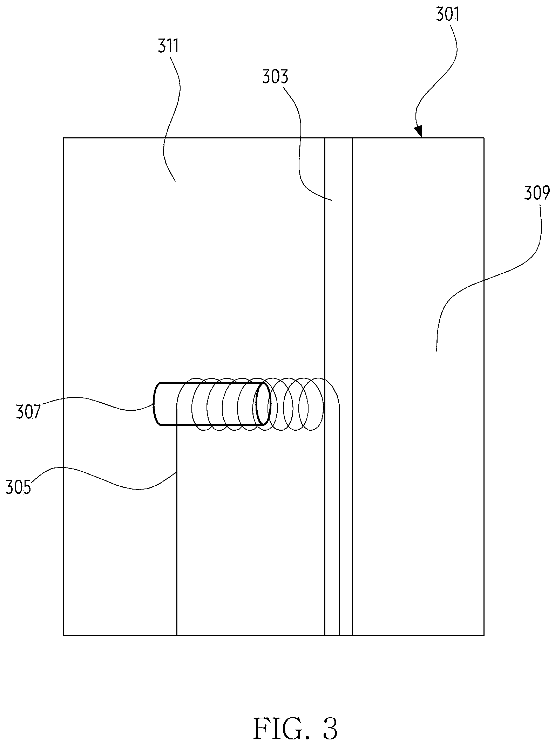

FIG. 3 illustrates an example of an operation of a speaker according to embodiments.

Referring to FIG. 3, a speaker 301 may convert an electrical signal into a sound wave and output the sound wave. The electrical signal may be referred to as an audio signal. The sound waves may be referred to as sound. The speaker 301 may include a diaphragm 303, a coil 305, or a magnet 307. The diaphragm 303 may generate the sound by vibration. When a current flows through the coil 305, the coil 305 may vibrate by interacting with a magnetic field formed by the magnet 307. The magnet 307 may form the magnetic field to generate electromagnetic force in the coil. A first space region 309 may be a space for passage of the sound of the speaker. For example, the first space region 309 may include a space facing a side of the diaphragm. A second space region 311 may be a rear space of the speaker opposite to the first space region 309. It may be a space for resonance of the sound of the speaker. For example, the second space region 311 may include a space facing an opposite side of the side of the diaphragm.

According to an embodiment, the audio signal, which is the electrical signal, may be transmitted to the coil 305 in a form of an alternating current. When the current flows through the coil 305, the coil 305 may receive the electromagnetic force by the magnetic field formed by the magnet 307. Whenever a direction of the current flowing through the coil 305 is changed, a direction of the electromagnetic force may be reversed. The coil 305 may vibrate by the electromagnetic force. The coil 305 may vibrate the diaphragm 303 by the vibration. The diaphragm 303 may generate the sound by vibrating air.

According to an embodiment, the first space region 309 may be referred to as a forward space region. The first space region 309 may be referred to as a front duct portion. The sound generated by the diaphragm 303 may pass through the first space region 309. The sound passing through the first space region 309 may be outputted to the outside of the electronic device (e.g., the electronic device 101 of FIG. 1). The sound outputted to the outside of the electronic device 101 may be detected by a user. When a size of the first space region 309 is large, sound having a frequency equal to or greater than a specified value may be difficult to proceed compared to when the size of the first space region 309 is small. For example, when the size of the first space region 309 is large, intensity of the sound having the frequency equal to or greater than the specified value may be small compared to intensity of sound having a frequency equal to or greater than a specified value when the size of the first space region 309 is small. Therefore, when the size of the first space region 309 increases, the at least one processor (the processor 120 of FIG. 1) may increase gain of the audio signal having the frequency equal to or greater than the specified value. According to an embodiment, the at least one processor 120 may increase the gain of the audio signal having the frequency equal to or greater than the specified value based on a first audio signal processing parameter. The at least one processor 120 may optimize sound quality of the audio signal based on the first audio signal processing parameter.

According to an embodiment, when the size of the first space region 309 is large, sound of large intensity may be generated even if voltage applied to the coil 305 is low compared to when the size of the first space region 309 is small. Therefore, when the size of the first space region 309 increases, the at least one processor 120 may reduce the gain of the audio signal through an amplifier included in the speaker 301. In an embodiment, the at least one processor 120 may adjust the gain of the audio signal based on the first audio signal processing parameter. In an embodiment, the at least one processor may determine a gain degree of the audio signal by the amplifier based on the second audio signal processing parameter.

According to an embodiment, the second space region 311 may be referred to as a backward space region. When a size of the second space region 311 is large, sound having a frequency less than the specified value may be better resonated compared to when the size of the second space region 311 is small. For example, when the size of the second space region 311 is large, intensity of the sound having the frequency less than the specified value may be greater compared to intensity of the sound having the frequency less than the specified value when the size of the second space region 311 is small. Therefore, when the size of the second space region 311 increases, a property of the audio signal may be changed to match changing sound. For example, the at least one processor 120 may increase gain of the audio signal having the frequency less than the specified value. According to an embodiment, the at least one processor 120 may increase the gain of the audio signal having the frequency less than the specified value based on the first audio signal processing parameter. The at least one processor 120 may optimize sound quality of the audio signal based on the first audio signal processing parameter.

According to an embodiment, when the size of the second space region 311 is large, sound of large intensity may be generated even if voltage applied to the coil 305 is low compared to when the size of the second space region 311 is small. Therefore, when the size of the second space region 311 increases, the at least one processor 120 may reduce the gain of the audio signal through the amplifier included in the speaker 301. The at least one processor 120 may adjust the gain of the audio signal based on the first audio signal processing parameter. The at least one processor may determine a gain degree of the audio signal by the amplifier based on the second audio signal processing parameter.

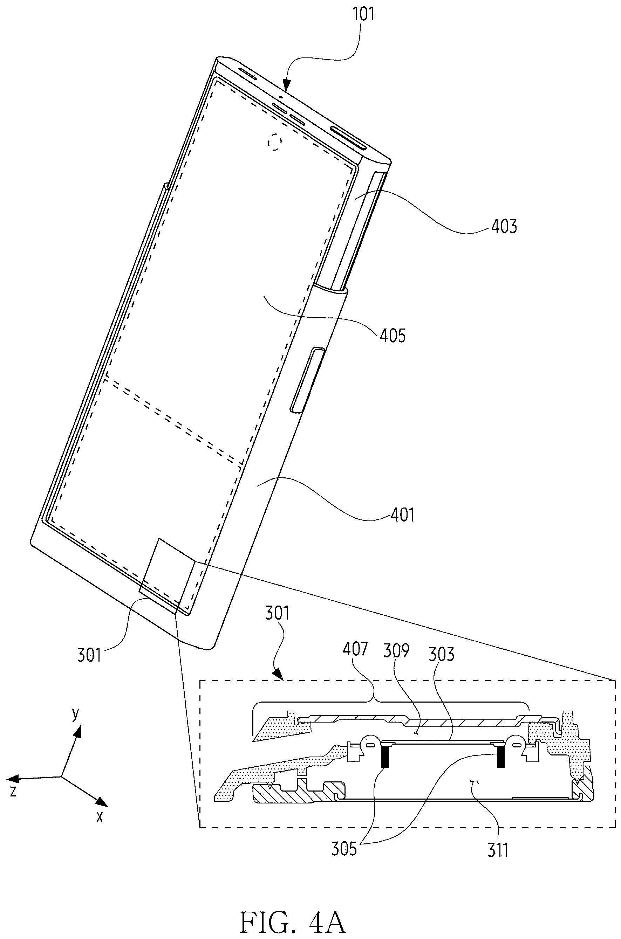

FIG. 4A illustrates an example of a space state according to embodiments.

Referring to FIG. 4A, an electronic device 101 may include a first housing 401 and a second housing 403. The second housing 403 may be movable with respect to the first housing 401 in a (+) y-axis direction and a (-) y-axis direction. The electronic device 101 may include a speaker 301. The speaker 301 may include a diaphragm 303 or a coil 305. A first space region 309 may be a space for passage of the sound of the speaker 301. The first space region 309 may include a space on a side of the diaphragm 303. A length 407 of the first space region may be a length at which the sound of the speaker proceeds in the speaker. A second space region 311 may be a rear space of the speaker opposite to the first space region. The second space region 311 may be a space for resonance of the sound of the speaker. The second space region 311 may include a space on an opposite side of the side of the diaphragm 303. The electronic device 101 may include a display 405. Width of the first space region may be width of the first space region in a direction perpendicular to the length 407 of the first space region.

According to an embodiment, the electronic device 101 may include the first housing 401 and the second housing 403. The second housing 403may be pushed into or be pulled out from the first housing 401. However, it is not limited thereto. The second housing 403 may move with respect to the first housing 401. For example, as the second housing 403 is pulled out from or is pushed into the first housing 401, a change in a size of the first space region 309 or a change in a size of the second space region 311 may occur. For example, as the second housing 403 moves with respect to the first housing 401, the change in the size of the first space region 309 or the change in the size of the second space region 311 may occur.

According to an embodiment, a state in which the second housing 403 moves in the (+)y-axis direction with respect to the first housing 401 may be referred to as a first state. For example, in the first state, the second housing 403 may not be movable further in the (+) y-axis direction with respect to the first housing 401. For example, in the first state, the display 405 included in the electronic device 101 may provide the widest display region. For example, in a second state, a display region of the display 405 included in the first housing 401 may be exposed in the first state. For example, the first state may be referred to as a slide-out state or an open state in terms of at least a portion of the second housing 403 being positioned in the outside of the first housing 401. For example, the first state may be referred to as an extended state in terms of providing the display region having the largest size. However, it is not limited thereto.

According to an embodiment, a state in which the second housing 403 moves in the (-) y-axis direction with respect to the first housing 401 may be referred to as the second state. For example, in the second state, the second housing 403 may not be movable further in the (-) y-axis direction with respect to the first housing 401. For example, in the second state, the display 405 included in the electronic device 101 may provide the narrowest display region. For example, although not illustrated in FIG. 4A, in the second state, a portion of the display region 405 may be included in the first housing 401. For example, in the second state, the portion of the display region may be covered by the first housing 401. For example, in the second state, the portion of the display region may be rolled into the first housing 401. For example, the second state may be referred to as a slide-in state or a closed state in terms of at least a portion of the second housing 403 being positioned in the first housing 401. For example, the second state may be referred to as an a reduced state in terms of providing the display region having the smallest size. However, it is not limited thereto.

According to an embodiment, a change in the size of the first space region 309 or a change in the size of the second space region 311 may occur, according to a relative position change of the first housing 401 or the second housing 403. In an embodiment, as the electronic device 101 is changed from the second state to the first state the sizes of the first space region 309 and the second space region 311 may increase. For example, as the electronic device 101 is changed from the second state to the first state, the size of the first space region 309 may increase. For example, as the electronic device 101 being changed from the second state to the first state, the size of the second space region 311 may increase,.

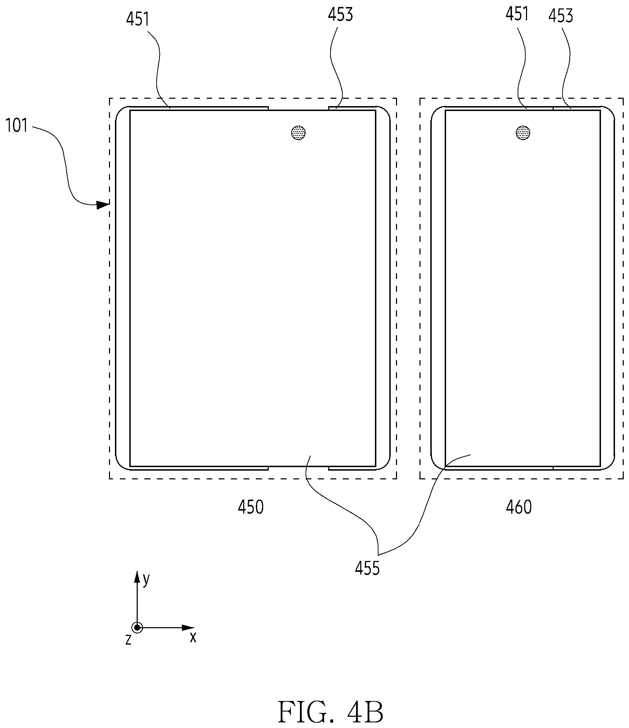

In FIG. 4A, the electronic device 101 is illustrated as a rollable electronic device in which the second housing is movable with respect to the first housing in a direction parallel to the y-axis, but an embodiment of the present disclosure is not limited thereto. According to an embodiment, the electronic device 101 may be the rollable electronic device in which the second housing is movable with respect to the first housing in a direction parallel to an x-axis. Hereinafter, an example of a structure of the rollable electronic device in which the second housing is movable with respect to the first housing in the direction parallel to the x-axis is illustrated in FIG. 4B. In an embodiment, the size of the first space region 309 of the speaker 301 and the size of the second space region 311 of the speaker 301 may be changed due to a change in the structure of the rollable electronic device. According to another embodiment, the electronic device 101 may include a flexible display. For example, the size of the first region 309 of the speaker 301 and the size of the second space region 311 of the speaker 301 may be changed due to the change in the structure of the electronic device including the flexible display.

FIG. 4B illustrates an example of a change in a space state according to embodiments. In FIG. 4B, an example of the second housing moving in a direction (e.g., an (+) x-axis, and an (-)-axis) different from the moving direction (e.g., the (+) y-axis, and the (-) y-axis) of the second housing in FIG. 4A is illustrated.

Referring to FIG. 4B, the electronic device 101 may include a first housing 451, a second housing 453 movable with respect to the first housing 451 in the (+) x-axis direction or the (-) x-axis direction, and a display 455.

According to an embodiment, the electronic device 101 may be in a first state 450. A state in which the second housing 453 moves in the (+)x-axis direction with respect to the first housing 451 may be referred to as the first state 450. For example, in the first state 450, the second housing 453 may not be movable further in the (+)x-axis direction with respect to the first housing 451. For example, in the first state 450, the display included in the electronic device 101 may provide the widest display region. For example, the first state 450 may be referred to as a slide-out state or an open state in terms of at least a portion of the display 455 being positioned in the outside of the first housing 451. For example, the first state 450 may be referred to as an extended state in terms of providing the display region having the largest size. However, it is not limited thereto.

According to an embodiment, the electronic device 101 may be in a second state 460. A state in which the second housing 453 moves in the (-) x-axis direction with respect to the first housing 451 may be referred to as the second state 460. For example, in the second state 460, the second housing 453 may not be movable further in the (-) y-axis direction with respect to the first housing 451. For example, in the second state 460, the display 455 included in the electronic device 101 may provide the narrowest display region. For example, although not illustrated in FIG. 4B, in the second state 460, a portion of the display 455 may be included in the first housing 451. For example, in the second state 460, a partial region of the display 455 may be covered by the first housing 451. For example, in the second state 460, a partial region of the display may be rolled into the first housing 451. For example, the second state 460 may be referred to as a slide-in state or a closed state in terms of at least a portion of the display 455 being positioned in the first housing 451. For example, the second state 460 may be referred to as an a reduced state in terms of providing the display region having the smallest size. However, it is not limited thereto.

According to an embodiment, a change in a size of the first space region (e.g., the first space region 309 of FIG. 4A) or a change in a size of the second space region (the second space region 311 of FIG. 4A) may occur, according to a relative position change of the first housing 451 or the second housing 453. In an embodiment, as the electronic device 101 is changed from the second state 460 to the first state 450, the sizes of the first space region 309 and the second space region 311 may increase. For example, as the electronic device 101 is changed from the second state 460 to the first state 450, the size of the first space region 309 may increase. For example, as the electronic device 101 is changed from the second state 460 to the first state 450, the size of the second space region 311 may increase.

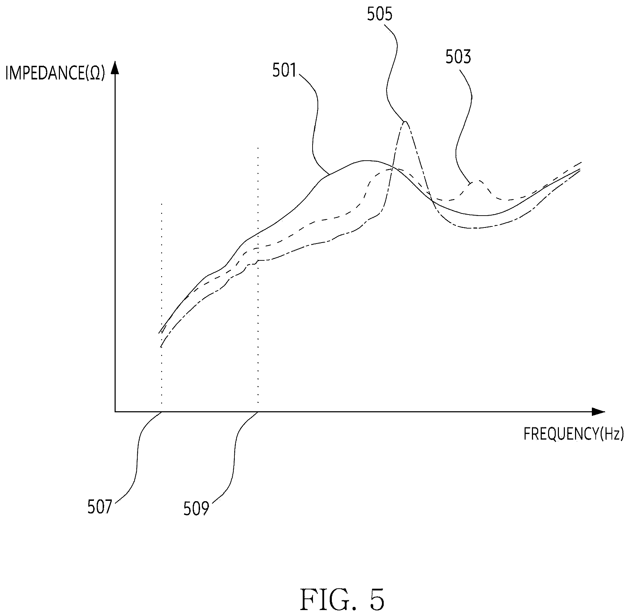

According to an embodiment, at least one processor (e.g., the processor 120 of FIG. 1) may identify at least one audio signal processing parameter based on the change in the space state. In an embodiment, the at least one processor 120 may adjust gain of an audio signal in a specified frequency range based on the audio signal processing parameter. The at least one processor 120 may output the audio signal with the adjusted gain through a speaker. Hereinafter, in FIG. 5, a method of detecting the change in the space state by the at least one processor 120 is described.

FIG. 5 illustrates an example of an impedance according to a change in a space state according to embodiments.

Referring to FIG. 5, a graph may indicate an impedance value of a speaker 301 that varies according to a frequency of an audio signal outputted to the speaker (e.g., the speaker 301 of FIG. 3). A unit of an X-axis may be hertz (Hz). A Y-axis may be an impedance value. A unit of the Y-axis may be ohm (Ω). A first line 501 indicates an impedance value of the speaker 301 that varies according to a frequency of the audio signal outputted to the speaker 301 in case that a first space region (e.g., the first space region 309 of FIG. 3) is a first front space value and a second space region (the second space region 311 of FIG. 3) is a second rear space value. The second line 503 indicates an impedance value of the speaker 301 that varies according to a frequency of the audio signal outputted to the speaker 301 in case that the first space region 309 is a second front space value and the second space region 311 is a first rear space value. A third line 505 indicates an impedance value of the speaker 301 that varies according to the frequency of the audio signal outputted to the speaker 301 in case that the first space region 309 is the first front space value and the second space region 311 is the first rear space value. For example, the first front space value may be smaller than the second front space value. For example, the first rear space value may be smaller than the second rear space value. For example, the first line 501 indicates the impedance value of the speaker 301 according to the frequency of the audio signal outputted to the speaker 301 in case that a size of the second space region 311 increases compared to a basic state (a state of the speaker in the third line 505). The second line 503 indicates the impedance value of the speaker 301 that varies according to the frequency of the audio signal outputted to the speaker 301 in case that a size of the first space region 309 increases compared to the basic state (the state of the speaker in the third line 505). In an embodiment, a first frequency 507 may be a frequency of a first pilot signal. For example, the first frequency 507 may be approximately 20 Hz. In an embodiment, a second frequency 509 may be a frequency of a second pilot signal. For example, the second frequency 509 may be approximately 90 Hz. The first pilot signal may be an audio signal for identifying a change in a temperature of a coil included in the speaker 301 or a change in a space state. The at least one processor may identify the change in the space state of the speaker 301 through the first pilot signal. The second pilot signal may be an audio signal for identifying a change in the size of the first space region 309 of the speaker 301 or a change in the size of the second space region 311 of the speaker.

According to an embodiment, when the size of the first space region 309 or the size of the second space region 311 is changed, an impedance value of the coil 305 included in the speaker 301 may be changed. This is because resistance applied by air in the first space region 309 or air in the second space region 311 to the coil 305 of the speaker 301 is changed.

According to an embodiment, a first impedance may be measured in circuitry included in the speaker 301, while the first pilot signal having the first frequency 507 is outputted through the speaker 301. A second impedance may be measured in the circuitry included in the speaker 301 while the second pilot signal having the second frequency 509 is outputted through the speaker 301.

According to an embodiment, in the third line 505, the impedance value of the speaker 301 outputting the first pilot signal having the first frequency 507 may be less than a first threshold value. For example, the first threshold value may be approximately 9.00 Ω. For example, in the third line 505, the first impedance of the speaker 301 outputting the first pilot signal may be approximately 8.95Ω. According to an embodiment, in the first line 501 and the second line 503, the impedance value of the speaker 301 outputting the first pilot signal having the first frequency 507 may be equal to or greater than the first threshold value. For example, the first threshold value may be approximately 9.00 Ω. For example, in the first line 501, the first impedance of the speaker 301 outputting the first pilot signal may be approximately 9.05Ω. For example, in the second line 503, the impedance of the speaker 301 outputting the first pilot signal may be approximately 9.05Ω. For example, the at least one processor 120 may detect the change in the space state based on the first impedance equal to or greater than the first threshold value.

According to an embodiment, the at least one processor may identify the first impedance, which is an impedance of the speaker 301, while the first pilot signal having the first frequency 507 is outputted through the speaker 301. For example, when there is the change in the space state of the speaker, the first impedance may be equal to or greater than the first threshold value.

According to an embodiment, in the third line 505, the impedance value of the speaker 301 outputting the second pilot signal having the second frequency 509 may be less than a second threshold value. For example, the second threshold value may be approximately 9.6Ω. For example, in the third line 505, the impedance of the speaker 301 outputting the second pilot signal may be approximately 9.55Ω. According to an embodiment, in the second line 503, the impedance value of the speaker 301 outputting the second pilot signal having the second frequency 509 may be equal to or greater than the second threshold value, and less than a third threshold value. For example, the second threshold value may be approximately 9.6 Ω. For example, the third threshold value may be approximately 9.7Ω. For example, in the second line 503, the impedance of the speaker 301 outputting the second pilot signal may be approximately 9.67Ω. For example, the at least one processor 120 may detect a change in the first space region 309 based on the second impedance equal to or greater than the second threshold value and less than the third threshold value. According to an embodiment, in the first line 501, the impedance value of the speaker 301 outputting the second pilot signal having the second frequency 509 may be equal to or greater than the third threshold value. For example, the third threshold value may be approximately 9.7 Ω. For example, in the first line 501, the second impedance of the speaker 301 outputting the second pilot signal may be approximately 9.77 Ω. For example, the at least one processor 120 may detect a change in the second space region 311 based on the second impedance equal to or greater than the third threshold value.

According to an embodiment, the at least one processor may identify the second impedance, which is the impedance of the speaker 301, while the second pilot signal having the second frequency 509 is outputted through the speaker 301. When the second space region of the speaker is increased compared to the basic state (e.g., a state in which the size of the first space region of the speaker is the first front space value and the size of the second space region of the speaker is the first rear space value), the second impedance may be equal to or greater than the third threshold value. When the first space region of the speaker is increased compared to the basic state, the second impedance may be equal to or greater than the second threshold value and less than the third threshold value.

According to an embodiment, in a first state, the size of the first space region 309 may be the first front space value. In the first state, the size of the second space region 311 may be the first rear space value. For example, the first front space value may be small compared to the second front space value. For example, the first rear space value may be small compared to the second rear space value. The third line 505 may be referred to as the first state. In the first state, the first impedance of the speaker 301 may be less than the first threshold value. For example, the first threshold value may be approximately 9.00 Ω. For example, in the first state, the first impedance may be approximately 8.95 Ω. In the first state, the second impedance of the speaker 301 may be less than the second threshold value. For example, the second threshold value may be approximately 9.6 Ω. For example, in the first state, the second impedance may be approximately 9.55 Ω.

According to an embodiment, in a second state, the size of the first space region 309 may be the second front space value. In the second state, the size of the second space region 311 may be the first rear space value. For example, the first front space value may be small compared to the second front space value. For example, the first rear space value may be small compared to the second rear space value. The second line 503 may be referred to as the second state. In the second state, the first impedance of the speaker 301 may be equal to or greater than the first threshold value. For example, the first threshold value may be approximately 9.00 Ω. For example, in the second state, the first impedance may be approximately 9.05 Ω. In the second state, the second impedance of the speaker 301 may be equal to or greater than the second threshold value, and less than the third threshold value. For example, the second threshold value may be approximately 9.6 Ω. The third threshold value may be approximately 9.7 Ω. For example, in the second state, the second impedance may be approximately 9.67 Ω.

According to an embodiment, in a third state, the size of the first space region 309 may be the first front space value. In the second state, the size of the second space region 311 may be the second rear space value. For example, the first front space value may be small compared to the second front space value. For example, the first rear space value may be small compared to the second rear space value. The first line 501 may be referred to as the third state. In the third state, the first impedance of the speaker 301 may be equal to or greater than the first threshold value. For example, the first threshold value may be approximately 9.00 Ω. For example, in the third state, the first impedance of the speaker 301 may be approximately 9.05 Ω. In the third state, the second impedance of the speaker 301 may be equal to or greater than the third threshold value. For example, the third threshold value may be approximately 9.7 Ω. For example, in the third state, the second impedance may be approximately 9.77 Ω.

According to an embodiment, the first frequency 507 may be below the second frequency 509. The first frequency 507 may be below an audible frequency. For example, the first frequency 507 may be approximately 20 hertz (Hz). Therefore, even if the first pilot signal having the first frequency 507 is outputted through the speaker, a user may not be able to detect the signals through an auditory organ. For example, the second frequency 509 may be approximately 90 hertz (Hz). Therefore, when the second pilot signal having the second frequency 509 is outputted through the speaker, the user may detect it through the auditory organ. According to an embodiment, the at least one processor 120 may output the second pilot signal through the speaker based on a signal for playback of an audio signal. For example, the at least one processor 120 may output the second pilot signal through the speaker based on a signal for playback a music signal. In an embodiment, the at least one processor 120 may output the second pilot signal through the speaker only when music playback starts. This is because if the second pilot signal is outputted while the music is being played, a user experience may be deteriorated. In an embodiment, the at least one processor 120 may output the second pilot signal through the speaker based on identifying a signal for changing a structure of the electronic device. This is because the second pilot signal is not continuously played.

According to an embodiment, the at least one processor may identify the second impedance as being less than the second threshold value and provide, through a display, a notification for reporting moisture detection. This is because in case that water enters the first space region 309, the first space region 309 may be narrowed.

According to another embodiment, the at least one processor 120 may identify the first impedance equal to or greater than the first threshold value. The at least one processor 120 may identify the second impedance as being less than the second threshold value and output sound for moisture removal through the speaker. When the sound is played through the speaker, the moisture may escape to an outside of the electronic device 101 together with air vibration.

According to an embodiment, the change in the size of the second space region 311 may occur by movement of the first housing 401 and the second housing 403 included in the electronic device 101. For example, the size of the second space region 311 may increase when the first housing 401 and the second housing 403 are in a slide-out state (e.g., the slide-out state of FIG. 4A).

In FIG. 5, a case in which there is only the change in the size of the first space region 309 or a case in which there is only the change in the size of the second space region 311 is illustrated, but embodiments of the present disclosure are not limited thereto. According to an embodiment, when the size of the first space region 309 increases and the size of the second space region 311 increases, the second impedance value may increase to the third threshold value or more. The at least one processor may identify the second impedance value according to the change in the first space region 309 and the change in the second space region 311. For example, the at least one processor may identify the second impedance value when the size of the first space region 309 increases and the size of the second space region 311 increases. The at least one processor may identify the second impedance value when the size of the first space region 309 increases and the size of the second space region 311 decreases. The at least one processor may identify the second impedance value when the size of the first space region 309 decreases and the size of the second space region 311 increases. The at least one processor may identify the second impedance value when the size of the first space region 309 decreases and the size of the second space region 311 decreases. The at least one processor may identify the change in the space state corresponding to the identified second impedance value with reference to a mapping table.

In FIG. 5, only a case in which the size of the first space region 309 increases compared to the first state or a case in which the size of the second space region 311 increases compared to the first state is illustrated, but embodiments of the present disclosure are not limited thereto. According to an embodiment, the size of the second space region 311 may decrease compared to the first state. When the size of the second space region 311 decreases compared to the first state, the second impedance by the second pilot tone may decrease. According to another embodiment, width of the first space region 309 may decrease, and a length 407 of the first space region 309 may be maintained. When the width of the first space region 309 decreases and the length 407 of the first space region 309 is maintained, the second impedance by the second pilot tone may decrease. According to another embodiment, the width of the first space region 309 may be maintained, and the length 407 of the first space region 309 may decrease. When the width of the first space region 309 is maintained and the length 407 of the first space region 309 decreases, the second impedance by the second pilot tone may increase.

In FIG. 5, it has been described that the change in the first space region 309 or the change in the second space region 311 may be identified according to the change in the first impedance value and the change in the second impedance value, but embodiments of the present disclosure are not limited thereto. According to an embodiment, it may be identified based on a difference between the first impedance value and the second impedance value. For example, the change in the space region change may be identified based on a slope indicated by the first impedance value and the second impedance value in the graph indicating the impedance value of the speaker that varies according to the frequency. For example, a slope indicated by the first impedance value and the second impedance value on the graph when the second space region 311 increases may be greater than a slope indicated by the first impedance value and the second impedance value on the graph when the first space region 309 increases. For example, the slope indicated by the first impedance value and the second impedance value on the graph when the first space region 309 increases may be greater than a slope indicated by the first impedance value and the second impedance value on the graph when a space region is not changed.

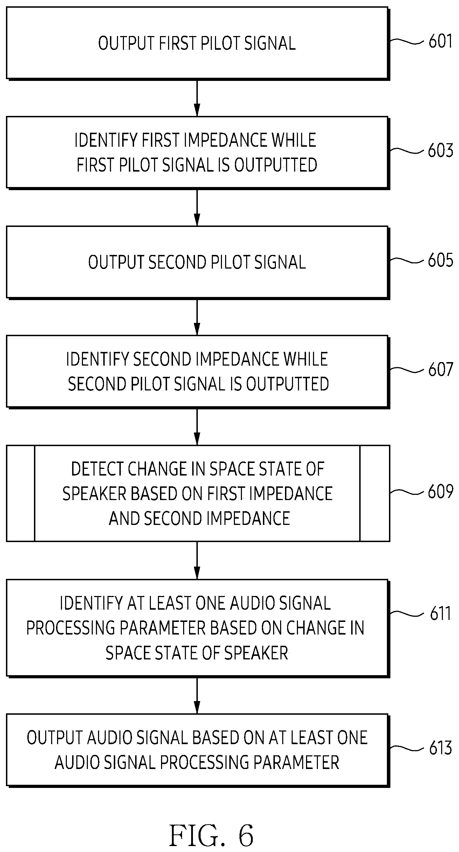

FIG. 6 illustrates a flow of an operation of an electronic device for changing at least one audio signal processing parameter according to a change in a space state according to embodiments.

According to an embodiment, the first space region (e.g., the first space region 309 of FIG. 3) may be referred to as a forward space region or a front duct portion of a speaker (e.g., the speaker 301 of FIG. 3). Sound generated from a diaphragm (e.g., the diaphragm 303 of FIG. 3) may pass through the first space region 309. According to an embodiment, the second space region (e.g., the second space region 311 of FIG. 3) may be referred to as a backward space region. The second space region 311 may be a rear space of the speaker opposite to the first space region 309.

Referring to FIG. 6, in operation 601, at least one processor (e.g., the processor 120 of FIG. 1) may output a first pilot signal. For example, the first pilot signal may have a first frequency (e.g., the first frequency 507 of FIG. 3), and may be an audio signal for identifying a change in a temperature of a coil included in the speaker (e.g., the speaker 301 of FIG. 3) or a change in a space state. For example, the first frequency 507 may be approximately 20 Hz. For example, the first frequency 507 may be less than an audible frequency. Therefore, even if the first pilot signal is outputted through the speaker 301, users may not be able to detect it through an auditory organ.

In operation 603, the at least one processor 120 may identify a first impedance while the first pilot signal is outputted. The first impedance may be measured in circuitry included in the speaker 301 while the first pilot signal having the first frequency 507 is outputted through the speaker 301.

In operation 605, the at least one processor 120 may output a second pilot signal. For example, the second pilot signal may have a second frequency 509 and may be an audio signal for identifying a change in a size of the first space region 309 of the speaker 301 or a change in a size of the second space region 311 of the speaker. For example, the second frequency may be approximately 90 Hz.

In operation 607, the at least one processor 120 may identify a second impedance while the second pilot signal is outputted. The second impedance may be measured in the circuitry included in the speaker 301 while the second pilot signal having the second frequency 509 is outputted through the speaker 301.

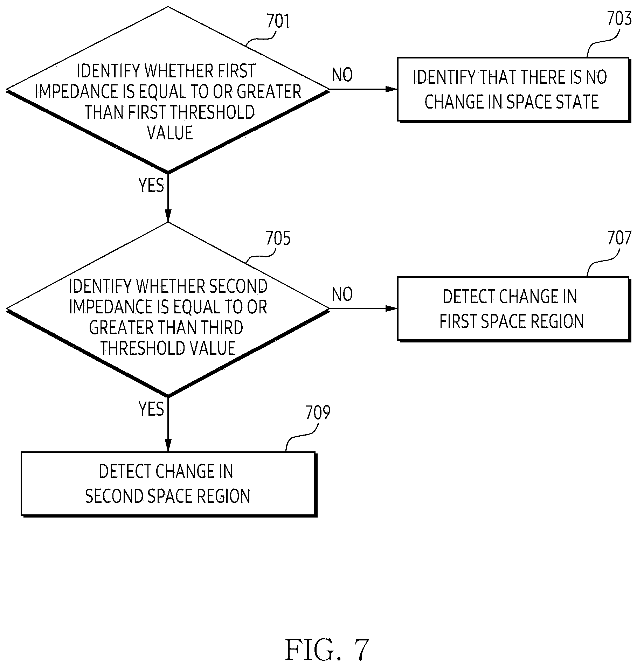

In operation 609, the at least one processor 120 may detect the change in the space state of the speaker based on the first impedance and the second impedance. For example, when the first impedance is less than a first threshold value, the at least one processor 120 may identify that there is no change in the space state of the speaker 301. When the first impedance is equal to or greater than the first threshold value, the at least one processor 120 may identify the change in the space state of the speaker. For example, when the second impedance is equal to or greater than a second threshold value and less than a third threshold value, the at least one processor 120 may detect a change in the first space region 309. The change in the first space region 309 may include an increase in the size of the first space region 309. For example, when the second impedance is equal to or greater than the third threshold value, the at least one processor 120 may detect a change in the second space region 311. The change in the second space region 311 may include an increase in the size of the first space region 309. Hereinafter, operations of FIG. 7 may be referred to.

In operation 611, the at least one processor 120 may identify at least one audio signal processing parameter based on the change in the space state of the speaker. According to an embodiment, sound passing through the first space region 309 may be outputted to the outside of the electronic device (e.g., the electronic device 101 of FIG. 1). The sound outputted to the outside of the electronic device 101 may be detected by a user. When the size of the first space region 309 is large, sound having a frequency equal to or greater than a specified value may be difficult to proceed compared to when the size of the first space region 309 is small. For example, when the size of the first space region 309 is large, intensity of the sound having the frequency equal to or greater than the specified value may be small compared to intensity of sound having the frequency equal to or greater than the specified value when the size of the first space region 309 is small. Therefore, when the size of the first space region 309 increases, the at least one processor (the processor 120 of FIG. 1) may decrease gain of an audio signal having the frequency equal to or greater than the specified value. According to an embodiment, the at least one processor 120 may change the gain of the audio signal to gain of an audio signal having the frequency equal to or greater than the specified value based on a first audio signal processing parameter.

According to an embodiment, when the size of the second space region 311 is large, sound of large intensity may be generated even if voltage applied to the coil 305 is low compared to when the size of the first space region 309 is small. Therefore, when the size of the second space region 311 increases, the at least one processor 120 may reduce the gain of the audio signal through an amplifier included in the speaker 301.

According to an embodiment, when the size of the second space region 311 is large, sound having a frequency less than the specified value may be better resonated compared to when the size of the second space region 311 is small. For example, when the size of the second space region 311 is large, intensity of the sound having the frequency less than the specified value may be greater compared to intensity of the sound having the frequency less than the specified value when the size of the second space region 311 is small. Therefore, when the size of the second space region 311 increases, the at least one processor 120 may decrease gain of the audio signal having the frequency less the specified value. According to an embodiment, the at least one processor 120 may change the gain of the audio signal to gain of an audio signal having the frequency less than the specified value based on the first audio signal processing parameter.

According to an embodiment, when the size of the second space region 311 is large, the sound of the large intensity may be generated even if the voltage applied to the coil 305 is low compared to when the size of the second space region 311 is small. Therefore, when the size of the second space region 311 increases, the at least one processor 120 may reduce the gain of the audio signal through the amplifier included in the speaker 301.

In operation 613, the at least one processor 120 may output an audio signal based on at least one audio signal processing parameter. The at least one processor 120 may optimize sound quality of the audio signal based on the first audio signal processing parameter. The at least one processor may determine a gain degree of the audio signal by the amplifier based on the second audio signal processing parameter.

According to an embodiment, the at least one processor 120 may identify that a temperature of the coil 305 is equal to or greater than a reference value based on the first impedance of the speaker 301. For example, the first impedance may be equal to or greater than the second threshold value. This is because, in case of a conductor, resistance increases as the temperature increases. The coil 305 of the speaker 301 may be configured with a conductor that conducts electricity. The at least one processor may perform an operation for lowering the temperature of the coil 305 to the reference value or less based on a change in the temperature of the coil 305 equal to or greater than the reference value.

In FIG. 6, only a case in which the size of the first space region 309 increases compared to the first state or a case in which the size of the second space region 311 increases compared to the first state is illustrated, but embodiments of the present invention are not limited thereto. According to an embodiment, the size of the second space region 311 may decrease compared to the first state. When the size of the second space region 311 decreases compared to the first state, the second impedance by the second pilot tone may decrease. According to another embodiment, width of the first space region 309 may decrease, and a length of the first space region 309 may be maintained. When the width of the first space region 309 decreases and the length of the first space region 309 is maintained, the second impedance by the second pilot tone may decrease. According to another embodiment, the width of the first space region 309 may be maintained, and the length of the first space region 309 may decrease. When the width of the first space region 309 is maintained and the length of the first space region 309 decreases, the second impedance by the second pilot tone may increase.

FIG. 7 illustrates a flow of an operation of an electronic device for detecting a change in a space state according to embodiments. The operation 609 of FIG. 6 may be referred to.

Referring to FIG. 7, in operation 701, the at least one processor 120 may identify whether a first impedance is equal to or greater than a first threshold value. The at least one processor 120 may perform operation 705 in case that the first impedance is equal to or greater than the first threshold value. The at least one processor 120 may perform operation 703 in case that the first impedance is less than the first threshold value. According to an embodiment, the first impedance may vary according to whether the change in the space state of the speaker (e.g., the speaker 301 of FIG. 3) occurs. When a size of a first space region (e.g., the first space region 309 of FIG. 3) or a size of a second space region (e.g., the second space region 311 of FIG. 3) is changed compared to a basic state (e.g., a speaker in which the first space region is a first front space value and the second space region is a first rear space value), an impedance value of a coil 305 included in the speaker 301 may be changed. This is because resistance applied by air in the first space region 309 or air in the second space region 311 to the coil 305 of the speaker 301 is changed.

In the operation 703, the at least one processor 120 may identify that there is no change in the space state. The space state of the speaker may be a state for a space through which sound generated from the speaker passes to be radiated to the outside. The space state may include at least one of a state related to the first space region 309 for passage of sound of the speaker or a state related to the second space region 311 for resonance of sound of the speaker. According to an embodiment, in case that the first impedance is less than the first threshold value, a size of the first space region 309 may be the first front space value. In case that the first impedance is less than the first threshold value, a size of the second space region 311 may be the first rear space value. This is because when the size of the first space region 309 or the size of the second space region 311 is changed, the first impedance is identified to be equal to or greater than the first threshold value. When identifying that there is no change in the space state, the at least one processor 120 may not change an audio signal processing parameter.

In the operation 705, the at least one processor 120 may identify whether a second impedance is equal to or greater than a third threshold value. The at least one processor 120 may perform operation 709 in case that the second impedance is equal to or greater than the third threshold value. The at least one processor 120 may perform operation 707 in case that the second impedance is less than the third threshold value. According to an embodiment, the second impedance may vary according to whether a change in the first space region 309 occurs or a change in the second space region 311 occurs. When the size of the first space region 309 increases, a second impedance value of the coil 305 included in the speaker 301 may be changed. This is because resistance applied by air in the first space region 309 to the coil 305 of the speaker 301 is changed. When the size of the second space region 311 increases, the second impedance value of the coil 305 included in the speaker 301 may be changed. This is because resistance applied by air in the second space region 311 to the coil 305 of the speaker 301 is changed. According to an embodiment, an amount of the change in the second impedance value due to an increase in the first space region 309 may be smaller than an amount of the change in the second impedance value due to an increase in the second space region 311. Since sound should be propagated to the outside of the electronic device (e.g., the electronic device 101 of FIG. 1), the first space region 309 is open toward the outside of the electronic device 101. The second space region 311 is not open to the outside for resonance of sound. Therefore, this is because a degree of resistance reduction due to the increase in the first space region 309 may be smaller than a degree of resistance reduction due to the increase in the second space region 311. Therefore, the at least one processor 120 may identify whether the first space region 309 is changed or the second space region 311 is changed based on the second impedance value.

In operation 707, the at least one processor 120 may detect a change in the first space region. According to an embodiment, when the second impedance is equal to or greater than the second threshold value and less than the third threshold value, the at least one processor 120 may identify the change in the first space region 309. The second impedance due to the change in the first space region 309 may be small compared to the second impedance due to the change in the second space region 311. This is because the degree of the resistance reduction due to the increase in the first space region 309 may be smaller than the degree of the resistance reduction due to the increase in the second space region 311. Therefore, the amount of the change in the second impedance due to the change in the first space region 309 may be small compared to the amount of the change in the second impedance due to the change in the second space region 311.

In operation 709, the at least one processor 120 may detect the change in the second space region 311. According to an embodiment, when the second impedance is equal to or greater than the third threshold value, the at least one processor 120 may identify the change in the second space region 311. The second impedance due to the change in the second space region 311 may be great compared to the second impedance due to the change in the first space region 309. This is because the degree of the resistance reduction due to the increase in the first space region 309 may be smaller than the degree of the resistance reduction due to the increase in the second space region 311. Therefore, the amount of the change in the second impedance due to the change in the second space region 311 may be great compared to the amount of the change in the second impedance due to the change in the first space region 309.

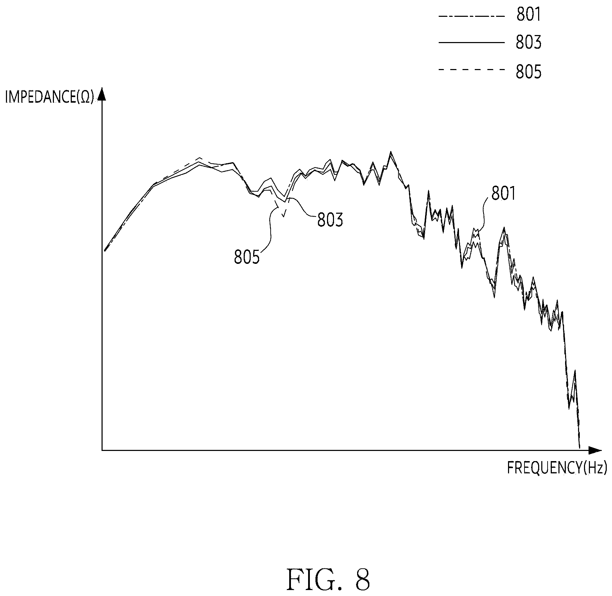

FIG. 8 illustrates an example of an impedance change according to a degree of charging of a battery, according to embodiments. The at least one processor may identify the degree of charging of the battery based on an impedance of a speaker while a pilot signal is outputted through the speaker. In addition, the at least one processor may output an audio signal processed according to at least one audio signal processing parameter, by identifying the at least one audio signal processing parameter according to the degree of charging of the battery.

Referring to FIG. 8, a graph may indicate an impedance value of the speaker that varies according to a frequency of the audio signal outputted to the speaker. A unit of an X-axis may be hertz (Hz). A Y-axis may be the impedance value. A unit of the Y-axis may be ohm (Ω). A first line 801 indicates an impedance value of the speaker 301 that varies according to the frequency of the audio signal outputted to the speaker 301 in case that the battery is charged by approximately 12%. A second line 803 indicates an impedance value of the speaker 301 that varies according to the frequency of the audio signal outputted to the speaker 301 in case that the battery is charged by approximately 54%. A third line 805 indicates an impedance value of the speaker 301 that varies according to the frequency of the audio signal outputted to the speaker 301 in case that the battery is charged by approximately 100%. According to a degree to which the battery is charged, a volume of the battery may increase. As a charging amount of the battery increases, the volume of the battery may increase. The electronic device 101 may use an internal space of the electronic device 101 as a second space region. Therefore, as the volume of the battery increases, the second space region may decrease. For example, as the charging amount of the battery increases, the second space region may decrease. According to an embodiment, in case that the pilot signal is transmitted through the speaker, the impedance of the speaker may vary according to the degree of charging of the battery. The at least one processor 120 may identify the degree of charging of the battery based on the impedance of the speaker while transmitting the pilot signal. According to an embodiment, a size of the second space region may be changed according to the degree of charging of the battery. Thus, when the charging amount of the battery decreases, the at least one processor 120 may specified a first audio signal processing parameter to increase gain of an audio signal having a frequency less than the specified value. When the charging amount of the battery decreases, the at least one processor 120 may specified a second audio signal processing parameter to increase the gain of the audio signal through an amplifier included in the speaker 301. The at least one processor 120 may output sound through the speaker based on the first audio signal processing parameter and the second audio signal processing parameter.

According to embodiments, an electronic device 101 is provided. The electronic device 101 may comprise at least one processor and a speaker 301. The at least one processor 120 may output a first pilot signal through the speaker 301 using a first frequency 507. The at least one processor 120 may identify a first impedance of the speaker 301 while the first pilot signal is output through the speaker 301. The at least one processor 120 may output a second pilot signal through the speaker 301 using a second frequency 509 different from the first frequency 507. The at least one processor 120 may identify a second impedance of the speaker 301 while the second pilot signal is output through the speaker 301. The at least one processor 120 may detect a change in a space state of the speaker 301 based on the first impedance and the second impedance. The at least one processor 120 may identify at least one audio signal processing parameter based on the change in the space state of the speaker 301. The at least one processor 120 may transmit an audio signal through the speaker 301 based on the at least one audio signal processing parameter. The space state of the speaker 301 may be a state for a space through which sound generated from the speaker passes to be radiated to the outside. The space state may include at least one of a state related to a first space region 309 for passage of sound of the speaker 301 or a state related to a second space region 311 for resonance of sound of the speaker 301.

According to an embodiment, the speaker 301 may include a diaphragm 303. The first space region 309 may include a space on a side of the diaphragm 303. The second space region 311 may include a space on an opposite side of the side of the diaphragm 303. The second space region 311 may be a rear space of the speaker opposite to the first space region 309.

According to an embodiment, to detect the change in the space state of the speaker 301, the at least one processor 120 may identify whether the first impedance of the speaker 301 is equal to or greater than a first threshold value. The at least one processor 120 may detect a change in the space state based on the first impedance being equal to or greater than the first threshold value. The at least one processor 120 may identify whether the second impedance of the speaker 301 is equal to or greater than a second threshold value and less than a third threshold value. The at least one processor 120 may detect a change in the first space region 309 based on the first impedance being equal to or greater than the second threshold value and less than the third threshold value. The at least one processor 120 may identify whether the second impedance of the speaker 301 is equal to or greater than the third threshold value. The at least one processor 120 may detect a change in the second space region 311 based on the second impedance being equal to or greater than the third threshold value.

According to an embodiment, to output the audio signal through the speaker 301 based on the at least one audio signal processing parameter, the at least one processor 120 may adjust gain of an audio signal within a specified range based on the at least one audio signal processing parameter. The at least one processor 120 may output the audio signal with the adjusted gain through the speaker 301.

According to an embodiment, the speaker 301 may include a coil 305. The at least one processor 120 may identify that a temperature of the coil 305 is equal to or greater than a reference value based on the first impedance of the speaker 301. The at least one processor 120 may, based on a change in the temperature of the coil 305 being equal to or greater than the reference value, further perform an operation to lower the temperature of the coil 305 to equal to or less than the reference value.

According to an embodiment, the electronic device 101 may comprise a first housing 401 or 451, and a second housing 403 or 453. The change in the space state may include at least one of a change in a size of the first space region 309 or a change in a size of the second space region 311, in accordance with the second housing 403 or 453 being pulled out from or being pushed into the first housing 401 or 451.

According to an embodiment, the first frequency 507 may be below the second frequency 509. The first frequency 507 may be below an audible frequency.

According to an embodiment, the at least one processor may further output the second pilot signal through the speaker 301 based on a signal for playback of the audio signal.

According to an embodiment, the electronic device 101 may further comprise a display 160. The at least one processor may identify the second impedance as being less than the second threshold value. The at least one processor 120 may further display, through the display 160, a notification for reporting moisture detection.

According to an embodiment, the at least one processor may identify the second impedance is less than the second threshold value. The at least one processor 120 may further output sound for moisture removal through the speaker 301.

According to embodiments, an electronic device 101 is provided. A method performed by the electronic device 101 may comprise outputting a first pilot signal through a speaker 301 using a first frequency 507. The method may comprise identifying a first impedance of the speaker 301 while the first pilot signal is output through the speaker 301. The method may comprise outputting a second pilot signal through the speaker 301 using a second frequency 509 different from the first frequency 507. The method may comprise identifying a second impedance of the speaker 301 while the second pilot signal is output through the speaker 301. The method may comprise detecting a change in a space state of the speaker 301 based on the first impedance and the second impedance. The method may comprise identifying at least one audio signal processing parameter based on the change in the space state of the speaker 301. The method may comprise outputting an audio signal through the speaker 301 based on the at least one audio signal processing parameter. The space state of the speaker 301 may be a state for a space through which sound generated from the speaker passes to be radiated to the outside. The space state may include at least one of a state related to a first space region 309 for passage of sound of the speaker 301 or a state related to a second space region 311 for resonance of sound of the speaker 301.

According to an embodiment, the speaker 301 may include a diaphragm 303. The first space region 309 may include a space on a side of the diaphragm 303. The second space region 311 may include a space on an opposite side of the side of the diaphragm 303. The second space region 311 may be a rear space of the speaker opposite to the first space region 309.

According to an embodiment, detecting the change in the space state of the speaker 301 may comprise identifying whether the first impedance of the speaker 301 is equal to or greater than a first threshold value. The detecting the change in the space state of the speaker 301 may comprise detecting the change in the space state based on the first impedance being equal to or greater than the first threshold value. The detecting the change in the space state of the speaker 301 may comprise identifying whether the second impedance of the speaker 301 is equal to or greater than a second threshold value and less than a third threshold value. The detecting the change in the space state of the speaker 301 may comprise detecting a change in the first space region 309 based on the first impedance being equal to or greater than the second threshold value and less than the third threshold value. The detecting the change in the space state of the speaker 301 may comprise identifying whether the second impedance of the speaker 301 is equal to or greater than the third threshold value. The detecting the change in the space state of the speaker 301 may comprise detecting a change in the second space region 311 based on the second impedance being equal to or greater than the third threshold value.

According to an embodiment, outputting the audio signal through the speaker 301 based on the at least one audio signal processing parameter may comprise adjusting gain of an audio signal within a specified range based on the at least one audio signal processing parameter. The outputting the audio signal through the speaker 301 based on the at least one audio signal processing parameter may comprise outputting the audio signal with the adjusted gain through the speaker 301.

According to an embodiment, the speaker 301 may include a coil 305. The method may further comprise identifying that a temperature of the coil 305 is equal to or greater than a reference value based on the first impedance of the speaker 301. The method may further comprise, based on a change in the temperature of the coil 305 being equal to or greater than the reference value, an operation to lower the temperature of the coil 305 to equal to or less than the reference value.

According to an embodiment, the change in the space state may include at least one of a change in a size of the first space region 309 or a change in a size of the second space region 311, in accordance with a second housing 403 or 453 being pulled out from or being pushed into a first housing 401 or 451.

According to an embodiment, the first frequency 507 may be below the second frequency 509. The first frequency 507 may be below an audible frequency.

According to an embodiment, the method may further comprise outputting the second pilot signal through the speaker 301 based on a signal for playback of the audio signal.

According to an embodiment, the method may comprise identifying the second impedance 301 as being less than the second threshold value. The method may further comprise displaying, through a display 160, a notification for reporting moisture detection.

According to an embodiment, the method may comprise identifying the second impedance is less than the second threshold value. The method may further comprise outputting sound for moisture removal through the speaker 301.

According to an embodiment, a non-transitory storage medium is provided. The non-transitory storage medium may comprise memory storing instructions. The instructions, when executed by a processor, may cause an electronic device to output a first pilot signal through a speaker using a first frequency, identify a first impedance of the speaker while the first pilot signal is output through the speaker, output a second pilot signal through the speaker using a second frequency different from the first frequency, identify a second impedance of the speaker while the second pilot signal is output through the speaker, detect a change in a space state of the speaker based on the first impedance and the second impedance, identify at least one audio signal processing parameter based on the change in the space state of the speaker, and output an audio signal through the speaker based on the at least one audio signal processing parameter. The space state of the speaker may include at least one of a state related to a first space region for passage of sound of the speaker or a state related to a second space region for resonance of sound of the speaker.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
at least one processor (120); and
a speaker (301),
wherein the at least one processor (120) is configured to:
output a first pilot signal through the speaker (301) using a first frequency (507);
identify a first impedance of the speaker (301) while the first pilot signal is output through the speaker (301);
output a second pilot signal through the speaker (301) using a second frequency (509) different from the first frequency (507);
identify a second impedance of the speaker (301) while the second pilot signal is output through the speaker (301);
detect a change in a space state of the speaker (301) based on the first impedance and the second impedance;
identify at least one audio signal processing parameter based on the change in the space state of the speaker (301); and
output an audio signal through the speaker (301) based on the at least one audio signal processing parameter; and
wherein the space state of the speaker (301) includes at least one of a state related to a first space region (309) for passage of sound of the speaker (301) or a state related to a second space region (311) for resonance of sound of the speaker (301).

2. The electronic device of claim 1,
wherein the speaker (301) includes a diaphragm (303),
wherein the first space region (309) includes a space on a side of the diaphragm (303), and
wherein the second space region (311) includes a space on an opposite side of the side of the diaphragm (303).

3. The electronic device of claims 1 to 2,
wherein, to detect the change in the space state of the speaker (301), the at least one processor (120) is configured to:
identify whether the first impedance of the speaker (301) is equal to or greater than a first threshold value,
detect a change in the space state based on the first impedance being equal to or greater than the first threshold value,
identify whether the second impedance of the speaker (301) is equal to or greater than a second threshold value and less than a third threshold value,
detect a change in the first space region (309) based on the first impedance being equal to or greater than the second threshold value and less than the third threshold value,
identify whether the second impedance of the speaker (301) is equal to or greater than the third threshold value, and
detect a change in the second space region (311) based on the second impedance being equal to or greater than the third threshold value.

4. The electronic device of claims 1 to 3,
wherein, to output the audio signal through the speaker (301) based on the at least one audio signal processing parameter, the at least one processor (120) is configured to:
change a property of an audio signal within a specified range based on the at least one audio signal processing parameter, and
output the audio signal with the changed property through the speaker (301).

5. The electronic device of claims 1 to 4,
wherein the speaker (301) includes a coil (305), and
wherein the at least one processor (120) is further configured to:
identify that a temperature of the coil (305) is equal to or greater than a reference value based on the first impedance of the speaker (301), and
based on a change in the temperature of the coil (305) being equal to or greater than the reference value, perform an operation to lower the temperature of the coil (305) to equal to or less than the reference value.

6. The electronic device of claims 1 to 5, comprising:
a first housing (401, 451); and
a second housing (403, 453),
wherein the change in the space state includes at least one of a change in a size of the first space region (309) or a change in a size of the second space region (311), in accordance with the second housing (403, 453) being pulled out from or being pushed into the first housing (401, 451).

7. The electronic device of claims 1 to 6,
wherein the first frequency (507) is below the second frequency (509),
wherein the first frequency (507) is below an audible frequency, and,
wherein, to output the audio signal through the speaker (301) based on the at least one audio signal processing parameter, the at least one processor (120) is configured to adjust gain of an audio signal within a specified range based on the at least one audio signal processing parameter.

8. The electronic device of claims 1 to 7,
wherein the at least one processor (120) is further configured to output the second pilot signal through the speaker (301) based on a signal for playback of the audio signal.

9. The electronic device of claims 1 to 8, further comprising:
a display (160),
wherein the at least one processor (120) is further configured to:
identify the second impedance as being less than the second threshold value, and
display, through the display (160), a notification for reporting moisture detection.

10. The electronic device of claims 1 to 9,
wherein the at least one processor (120) is further configured to:
identify that the second impedance is less than the second threshold value, and
output sound for moisture removal through the speaker (301).

11. A method performed by an electronic device (101), the method comprising:
outputting a first pilot signal through a speaker (301) using a first frequency (507);
identifying a first impedance of the speaker (301) while the first pilot signal is output through the speaker (301);
outputting a second pilot signal through the speaker (301) using a second frequency (509) different from the first frequency (507);
identifying a second impedance of the speaker (301) while the second pilot signal is output through the speaker (301);
detecting a change in a space state of the speaker (301) based on the first impedance and the second impedance;
identifying at least one audio signal processing parameter based on the change in the space state of the speaker (301); and
outputting an audio signal through the speaker (301) based on the at least one audio signal processing parameter;
wherein the space state of the speaker (301) includes at least one of a state related to a first space region (309) for passage of sound of the speaker (301) or a state related to a second space region (311) for resonance of sound of the speaker (301).

12. The method of claim 11,
wherein the speaker (301) includes a diaphragm (303),
wherein the first space region (309) includes a space on a side of the diaphragm (303), and
wherein the second space region (311) includes a space on an opposite side of the side of the diaphragm (303).

13. The method of claims 11 to 12,
wherein detecting the change in the space state of the speaker (301) comprises:
identifying whether the first impedance of the speaker (301) is equal to or greater than a first threshold value;
detecting the change in the space state based on the first impedance being equal to or greater than the first threshold value;
identifying whether the second impedance of the speaker (301) is equal to or greater than a second threshold value and less than a third threshold value;
detecting a change in the first space region (309) based on the first impedance being equal to or greater than the second threshold value and less than the third threshold value;
identifying whether the second impedance of the speaker (301) is equal to or greater than the third threshold value; and
detecting a change in the second space region (311) based on the second impedance being equal to or greater than the third threshold value.

14. The method of claims 11 to 13,
wherein outputting the audio signal through the speaker (301) based on the at least one audio signal processing parameter comprises:
changing a property of an audio signal within a specified range based on the at least one audio signal processing parameter; and
outputting the audio signal with the changed property through the speaker (301).

15. A non-transitory storage medium,
comprising memory storing instructions,
wherein the instructions, when executed by a processor, cause an electronic device to:
output a first pilot signal through a speaker using a first frequency;
identify a first impedance of the speaker while the first pilot signal is output through the speaker;
output a second pilot signal through the speaker using a second frequency different from the first frequency;
identify a second impedance of the speaker while the second pilot signal is output through the speaker;
detect a change in a space state of the speaker based on the first impedance and the second impedance;
identify at least one audio signal processing parameter based on the change in the space state of the speaker; and
output an audio signal through the speaker based on the at least one audio signal processing parameter,
wherein the space state of the speaker includes at least one of a state related to a first space region for passage of sound of the speaker or a state related to a second space region for resonance of sound of the speaker.
